# EUROPEAN PATENT APPLICATION

(11) **EP 1 564 878 A2**
(43) Date of publication of application: **17.08.2005**
(21) Application number: 05001470.3
(22) Date of filing: 25.01.2005
(51) Int. Cl.: H02N 1/00

(54) **Electrostatic actuator**

(30) Priority: 13.02.2004 JP 2004036970
(71) Applicant: Murata Manufacturing Co., Ltd., Nagaokakyo-shi, Kyoto 617-8555 (JP)
(72) Inventor: Tamura, Masaya, Nagaokakyo-shi Kyoto-fu 617-8555 (JP)
(74) Representative: Schoppe, Fritz, Dipl.-Ing.

(57) **Abstract**

An electrostatic actuator includes a substrate upon which substantially U-shaped support beams are arranged such that a movable element is displaceable in the Y-axis direction. Then, the movable element is displaced from an initial position to a switching position by an electrostatic force between electrodes. When the movable element is at the initial position, the support beams are configured such that the arm portions of the support beams are not parallel to each other and, when the movable element is displaced by a large amount to the vicinity of the switching position, the arm portions are extended in the X-axis direction so as to be substantially parallel to each other. Thus, since the spring constant in the X-axis direction of the support beams is increased, transverse locational deviations when the movable element is displaced and short-circuiting by the deviations are prevented and, as a result, the movable element can be stably displaced by a large amount.

## Description

### BACKGROUND OF THE INVENTION

### 1. Field of the Invention

The present invention relates to an electrostatic actuator suitably used to drive a movable element disposed on a substrate by an electrostatic force between electrodes.

### 2. Description of the Related Art

An electrostatic actuator is generally used in optical communication components, such as optical switches, optical shutters, optical attenuators, angular velocity sensors, resonators, and other suitable devices (see, for example, U.S. Patent No. 6,229,640).

A conventional electrostatic actuator is formed by subjecting a low-resistance silicone to an etching process. The electrostatic actuator includes a substrate, a bar-shaped movable element disposed on the substrate with a space therebetween, a plurality of support beams provided between the substrate and the movable element such that the support beams may be bent and deformed, and a drive portion for driving the movable element by an electrostatic force in the Y-axis direction.

Here, the movable element is arranged to extend in the Y-axis direction perpendicular to the X-axis direction. Furthermore, the support beams are long and narrow bar-shaped elements having elasticity (spring action) and are disposed on both sides in the X-axis direction of the movable element. One end of the support beams is connected to the substrate and the other end is connected to the movable element. The movable element is supported by the support beams so as to be spaced from the substrate and movable in the Y-axis direction.

Furthermore, the drive portion includes a comb-shaped fixed electrode provided on the substrate, and a comb-shaped movable electrode meshed with the fixed electrode with a space therebetween in the X-axis direction, and the movable electrode is provided on the movable element. When no voltage is applied between the fixed electrode and the movable electrode, the movable element is maintained at an initial position by the support beams in a free state (not deformed state). Furthermore, when a voltage is applied between the fixed electrode and the movable electrode, an electrostatic force is generated between these electrodes and the support beams are bent and deformed and, as a result, the movable element is displaced in the Y-axis direction and driven to a fixed switching position.

Thus, in an electrostatic actuator to be used in optical switches, and other suitable devices, a mirror portion provided on the movable element is displaced between the initial position and the switching position and the optical paths are switched by moving the mirror portion into or out of the optical paths.

In the above-described prior art, when the movable element is displaced between the initial position and the switching position, it is necessary to set the amount of displacement to be as large as possible so as to increase the performance and reliability of the device in which the electrostatic actuator is used. That is, in optical switches, and other suitable devices, since the movable element (mirror portion) must be displaced more than the diameter of a light beam and the switching operation must be securely performed, there are many cases where the displacement must be set to 50 µm or more.

However, when the amount of displacement of the movable element is increased, locational deviations in the transverse direction (X-axis direction) perpendicular to the direction of displacement of the movable element are likely to occur and the operation of the actuator becomes unstable. Therefore, in the prior art, the amount by which the displacement of the movable element can be increased is limited, and it is difficult to obtain a sufficient amount of displacement of the movable element while maintaining the reliability of the actuator.

In particular, when comb-shaped electrodes are used as a drive portion, the fixed and movable electrodes are meshed with each other so as to have very small space therebetween. In such an actuator, even if the movable element is only slightly transversely displaced, the fixed electrode contacts the movable electrode and may be short-circuited. As a result, when the amount of displacement of the movable element is set to be large, the actuator may not operate properly.

### SUMMARY OF THE INVENTION

To overcome the problems described above, preferred embodiments of the present invention provide an electrostatic actuator in which the movable element is largely and stably displaced, transverse locational deviations of the movable element are prevented, a sufficient amount of displacement of the movable element is obtained, and the reliability is greatly improved.

Preferred embodiments of the present invention provide an electrostatic actuator including a substrate, a movable element disposed on the substrate and movable in the Y-axis direction perpendicular to the X-axis direction, a plurality of support beams provided between the substrate and the movable element so as to be bent and deformed, the support beams being positioned on both sides in the X-axis direction of the movable element and supporting the movable element such that the movable element is able to be displaced in the Y-axis direction, and a driver for displacing the movable element from an initial position to a switching position by driving the movable element in the Y-axis direction by an electrostatic force.

Each of the support beams includes two arm portions arranged so as to extend in the X-axis direction and having a space therebetween in the Y-axis direction, and a connection portion for connecting the arm portions that is bent so as to be substantially U-shaped. The arm portions of each support beam is configured such that, when the movable element is at the initial position, the arm portions are not parallel in the X-axis direction and, when the movable element is driven toward the switching position, the arm portions are extended so as to be substantially parallel.

Furthermore, in at least one preferred embodiment of the present invention, each of the arm portions of the support beams includes a plurality of bar-shaped elements extending in the X-axis direction and having a space therebetween in the Y-axis direction. The bar-shaped elements are connected to the connection portion at different locations in the Y-axis direction.

Furthermore, in at least one preferred embodiment of the present invention, the width dimension in the X-axis direction of the connection portion is greater than the width dimension in the Y-axis direction of each of the arm portions.

Furthermore, in at least one preferred embodiment of the present invention, the width dimension in the X-axis direction of the connection portion is greater than the width dimension in the Y-axis direction of each of the bar-shaped elements.

Furthermore, in at least one preferred embodiment of the present invention, the arm portions of the support beam include a substrate-side arm portion having one end connected to the substrate and the other end connected to the connection portion, and a movable element-side arm portion having one end connected to the movable element and the other end connected to the connection portion at a location spaced away from the substrate-side arm portion in the Y-axis direction.

Furthermore, in at least one preferred embodiment of the present invention, the driver includes a fixed electrode including a plurality of electrode plates extending in the Y-axis direction and having a space therebetween in the X-axis direction so as to be comb-shaped, the fixed electrode being provided on the substrate, and a movable electrode including a plurality of electrode plates provided on the movable element and meshed with the electrode plates of the fixed electrode, the electrode plates are spaced from one another so as to be comb-shaped and so as to generate an electrostatic force between the movable electrode and the fixed electrode.

According to one preferred embodiment of the present invention, when the movable element is displaced from the initial position to the switching position, the support beams are bent and deformed. In this case, when the movable element is moved within the vicinity of the initial position, since the electrostatic force in the transverse direction (X-axis direction) applied to the movable element is relatively small, even if the arm portions of the support beams are not parallel, the movable element can be stably driven in the Y-axis direction. Furthermore, when the movable element is displaced by a large amount, the arm portions of the support beams are extended so as to be substantially parallel along the X-axis direction perpendicular to the displacement direction of the movable element (Y-axis direction). Thus, since the support beams are substantially perpendicular to the displacement direction of the movable element, the spring constant in the X-axis direction of the support beams is increased as compared to the spring constant in the Y-axis direction.

As a result, when the movable element is displaced by a large amount, even if an asymmetrical electrostatic force is increased in the transverse direction (X-axis direction), the rigidity in the transverse direction of the support beams is increased, and thus, while the support beams are bent in the displacement direction of the movable element, locational deviations in the transverse direction of the movable element are minimized because of the high rigidity. Therefore, even if the amount of displacement of the moving element is set to be large, the movable element is stably and reliably displaced between the initial position and the switching position and, the amount of displacement of the movable element is sufficiently secured while the reliability of the actuator is greatly improved.

Furthermore, in at least one preferred embodiment of the present invention, each of the arm portions of the support beam includes a plurality of bar-shaped elements and the bar-shaped elements are connected to the connection portion at different locations in the Y-axis direction. In this way, the connection portion is connected to the arm portions at a plurality of locations and the rigidity at these connecting points is increased. Accordingly, when the support beams are bent and deformed, displacement such that the connection portion undulates in the X-axis direction at the end portion of the arm portions is minimized and the rigidity in the X-axis direction of the support beams as a whole is increased.

Furthermore, in at least one preferred embodiment of the present invention, the width dimension of the connection portion is set to be greater than the width dimension of the arm portions, the rigidity of the connection portion is increased, and the elasticity (spring action) is minimized. Thus, when the support beams are bent and deformed, the bending and deformation in the X-axis direction of the connection portion is minimized, and, as a result, the spring constant in the X-axis direction of the support beams is increased.

Furthermore, in at least one preferred embodiment of the present invention, since the width dimension of the connection portion is greater than the width dimension of each bar-shaped element of the arm portions, the bending and deformation in the X-axis direction of the connection portion is minimized by increasing the rigidity of the connection portion, and the spring constant in the X-axis direction of the support beams is increased.

Furthermore, in at least one preferred embodiment of the present invention, the support beams include a substrate-side arm portion, a movable element-side arm portion, and a connection portion so as to be substantially U-shaped, and the support beams are connected between the substrate and the movable element.

Moreover, in at least one preferred embodiment of the present invention, while the size of each electrode is reduced by using comb-shaped fixed and movable electrodes, a sufficient opposing area is maintained between the electrodes, and the movable element is efficiently driven by a large electrostatic force. Since transverse locational deviations of the movable element are prevented, a short-circuit between the facing electrodes having a very small gap therebetween is prevented.

Other features, elements, steps, characteristics and advantages of the present invention will become more apparent from the following detailed description of preferred embodiments with reference to the attached drawings.

### BRIEF DESCRIPTION OF THE DRAWINGS

Fig. 1 is a front view showing an optical switching device of a first preferred embodiment of the present invention;
Fig. 2 is a vertical sectional view taken on line II - II of Fig. 1;
Fig. 3 is a partially enlarged view showing a support beam, etc. in Fig. 1;
Fig. 4 is a front view showing the state where the movable element and the mirror portion are driven from the initial position to the switching position;
Fig. 5 is a partially enlarged view of Fig. 4 showing the state where the support beams are bent and deformed by the displacement of the movable element to the switching position;
Fig. 6 shows characteristic lines showing the relationship between the amount of displacement of the movable element and the ratio of spring constants of the support beam;
Fig. 7 is a partially enlarged view of an electrostatic actuator as a comparative example when seen from the same position as shown in Fig. 3;
Fig. 8 is a partially enlarged view of an optical switching device of a second preferred embodiment of the present invention when seen from the same position as shown in Fig. 3;
Fig. 9 is a partially enlarged view showing the state where the support beam in Fig. 8 is bent and deformed;
Fig. 10 is a front view showing an optical switching device of a third preferred embodiment of the present invention;
Fig. 11 is a front view showing the state where the movable element and the mirror portion of the optical switching device of the third preferred embodiment of the present invention are driven from the initial position to the switching position; and
Fig. 12 is a partially enlarged view of an optical switching device as a modified example of the present invention when seen from the same position as shown in Fig. 3.

### DETAILED DESCRIPTION OF PREFERRED EMBODIMENTS

Hereinafter, the electrostatic actuators according to preferred embodiments of the present invention will be described in detail with reference to the drawings.

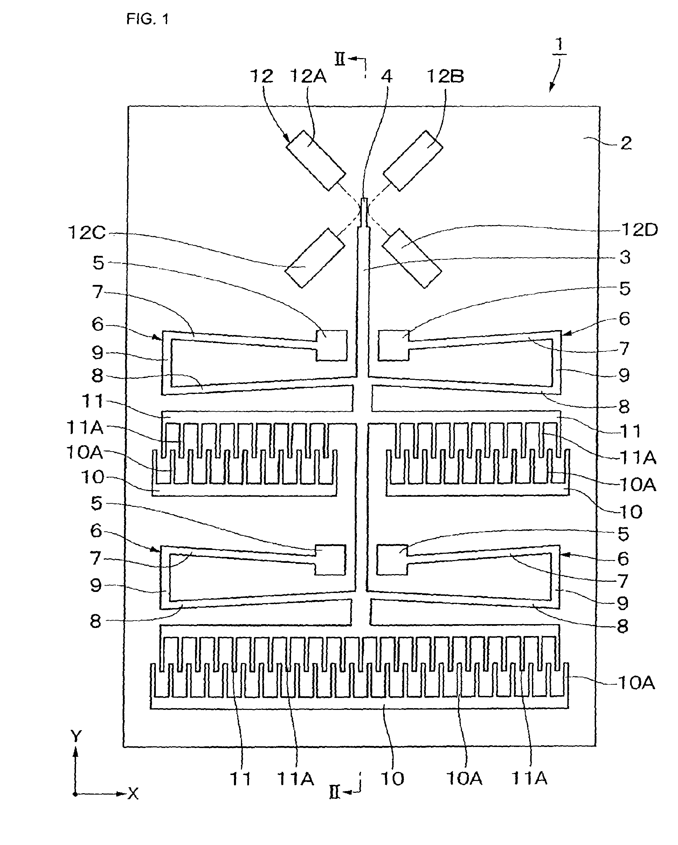

Figs. 1 to 6 show an electrostatic actuator according to a first preferred embodiment of the present invention and, in the present preferred embodiment, a case in which the electrostatic actuator is used in an optical switching device is described as an example.

In the drawings, reference numeral 1 represents an optical switching device and reference numeral 2 represents a substrate defining the base of the optical switching device 1. The substrate 2 is made of, for example, a glass plate having a size of a few mm square and horizontally extended along X and Y axes perpendicular to each other.

On the top surface of the substrate 2, a movable element 3, a mirror portion 4, support beam fixing portions 5, support beams 6, fixed electrodes 10, movable electrodes 11, and other elements to be described later are formed by subjecting a silicone material having low resistance to an etching process.

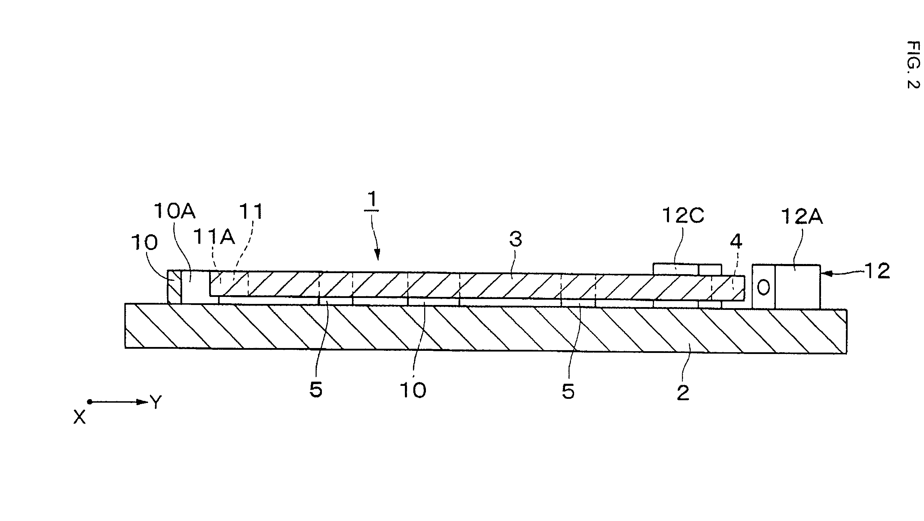

Reference numeral 3 represents a movable element provided on the substrate 2, and, as shown in Figs. 1 and 2, the movable element 3 is defined by a long and narrow bar-shaped element and extended in the Y-axis direction. Furthermore, the movable element 3 is supported by the support beams 6 such that the movable element 3 may be disposed in the Y-axis direction and maintained at a position separated away from the substrate 2 together with the mirror portion 4 and the movable electrodes 11.

Reference numeral 4 represents a mirror portion provided at an end of the movable element 3 and the mirror portion 4 is disposed so as to be able to move backward and forward across the light paths of an optical device 12 to be described later. The light paths are changed such that the light emitted from light sources 12A and 12B is reflected or passes through. Furthermore, the surface of the mirror portion 4 is mirror-finished such that a metal film is formed by plating, evaporation, sputtering, or other suitable method.

When no voltage is applied between the fixed electrodes 10 and the movable electrodes 11, as shown in Fig. 1, the mirror portion 4 is maintained together with the movable element 3 at an initial position by the elastic force (spring force) of the support beams 6.

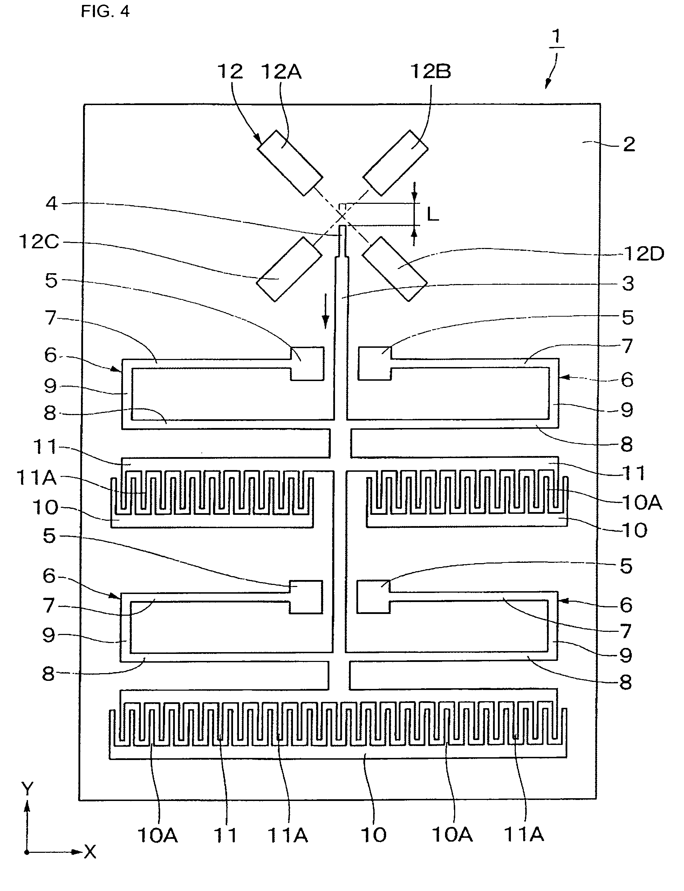

When a voltage is applied between the fixed electrodes 10 and the movable electrodes 11, as shown in Fig. 4, the movable element 3 is driven in the Y-axis direction by the electrostatic force between the fixed and movable electrodes 10 and 11 and the support beams 6 are bent and deformed. Thus, the movable element 3, the mirror portion 4, and the movable electrodes 11 are displaced from the initial position to a switching position and the light paths of the optical device 12 are switched by the mirror portion 4. In this case, when the amount of displacement where the movable element 3 is displaced between the initial position and the switching position is considered to be a maximum amount of displacement L, the maximum amount of displacement L is set to be about 60 µm, for example.

Reference numeral 5 represents four support beam fixing portions arranged so as to protrude from the substrate 2. Two support beam fixing portions 5 are disposed on each side in the X-axis direction of the movable element 3 and are also separated from each other in the Y-axis direction. The substrate-side arm portion 7 of a support beam 6 to be described later is connected to a support beam fixing portion 5.

Reference numeral 6 represents four support beams that are configured such that the support beams may be bent and deformed between the substrate 2 and the movable element 3. Two support beams 6 are disposed on each side in the X-axis direction of the movable element 3 at locations that are symmetrical to each other. The support beams are also disposed at two locations in the Y-axis direction that are separated from each other and support the movable element 3 at these locations, such that the movable element 3 can be displaced in the Y-axis direction.

Here, each of the support beams 6 is a long narrow bar-shaped element which is bent so as to be substantially U-shaped (rectangular) and include a substrate-side arm portion 7 and a movable element-side arm portion 8, both of which extend in the X-axis direction and are disposed so as to be separated from each other in the Y-axis direction, and a connection portion 9 connecting these arm portions 7 and 8.

In this case, one end of the substrate-side arm portion 7 is connected to the substrate 2 through the support beam fixing portion 5 and the other end is connected to the connection portion 9. Furthermore, one end of the movable element-side arm portion 8 is connected to the movable element 3 and the other end is connected to the connection portion 9 at a location separated in the Y-axis direction from the substrate-side arm portion 7. The connection portion 9 is substantially rectangular, is disposed at the other ends of the arm portions 7 and 8, and extends in the Y-axis direction.

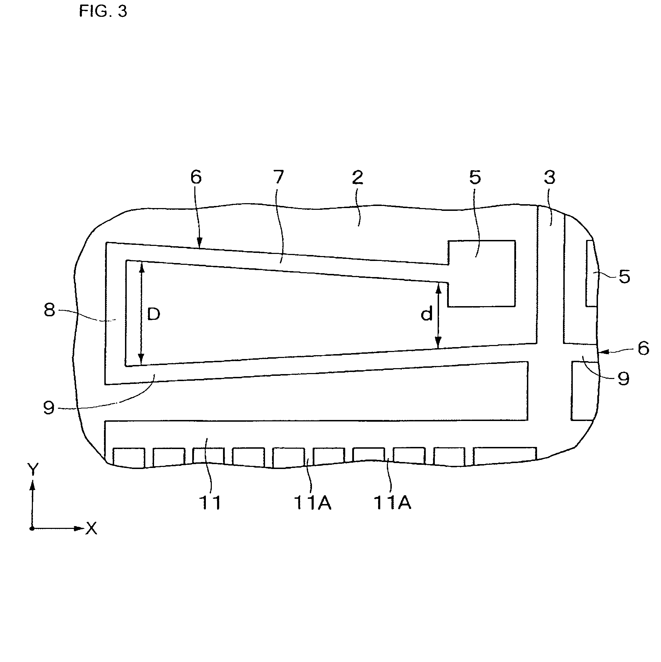

When the movable element 3 is at the initial position, as shown in Fig. 3, the support beam 6 is maintained in a free state in which there is no bending deformation and, in such a free state, one end side of the arm portions 7 and 8 is closed and substantially U-shaped. At this time, the arm portions 7 and 8 are extended in the X-axis direction and inclined in the Y-axis direction. The arm portions 7 and 8 are closer to each other at one side in the X-axis direction (the side of the movable element 3) than at the other side (the side of the connection portion 9) and are not parallel to each other. That is, the distance d in the Y-axis direction between the arm portions 7 and 8 at the one side is shorter than the distance D at the other side (D > d).

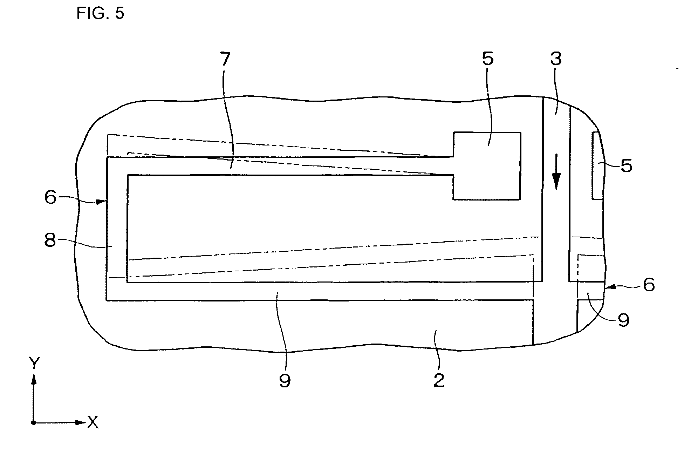

Furthermore, when the movable element 3 is driven toward the switching position, as shown in Fig. 5, the support beam 6 is bent and deformed in the Y-axis direction, and thus, the arm portions 7 and 8 are displaced so as to be open at the one side. When the movable element 3 is displaced by a large amount so as to be close to the switching position, the arm portions 7 and 8 are extended such that the arm portions 7 and 8 are substantially parallel to each other in the transverse direction (X-axis direction) that is substantially perpendicular to the displacement direction (Y-axis direction) of the movable element 3.

As a result, in the support beam 6, the ratio (kx/ky) of the spring constant kx in the X-axis direction to the spring constant ky in the Y-axis direction increases and the rigidity in the transverse direction (X-axis direction) of the support beam 6 increases. In this manner, in the present preferred embodiment, even if the movable element 3 is displaced by a large amount, the occurrence of positional deviations in the transverse direction is prevented by the support beam 6, and accordingly, the maximum amount of displacement L of the movable element 3 may be set at a sufficiently large value as will be described later.

Next, the driver of the movable element 3 is described. Reference numeral 10 represents three fixed electrodes provided on the substrate 2. As shown in Fig. 1, each fixed electrode 10 is defined by a comb-shaped electrode and the fixed electrodes 10 are disposed so as to sandwich the movable element 3 and are symmetrical on both sides in the X-axis direction. Also, the fixed electrodes 10 which are separated in the Y-axis direction are disposed at two locations. Each fixed electrode 10 includes a plurality of electrode plates 10A extending in the Y-axis direction and having a space therebetween in the X-axis direction.

Reference numeral 11 represents three movable electrodes provided at locations opposite to the fixed electrodes 10 on the movable element 3. Each movable electrode 11 defines a driver together with the fixed electrode 10 and includes a plurality of electrode plates 11A which mesh with the electrode plates 10A of the fixed electrode 10.

When a voltage is applied between the fixed electrode 10 and the movable electrode 11, an electrostatic force in the Y-axis direction is generated between the electrode plates 10A and the electrode plates 11A. By applying the electrostatic force to the movable element 3 from both sides of the movable element 3 at two locations in the Y-axis direction, the movable element 3 is displaced from the initial position to the switching position in a well balanced manner.

Reference numeral 12 represents an optical device provided on the substrate 2 and the optical device 12 includes light sources 12A and 12B and light receiving portions 12C and 12D which are connected to optical fibers (not illustrated). When the movable element 3 is at the initial position, the optical paths are provided between the light source 12A and the light receiving portion 12C and between the light source 12B and the light receiving portion 12D through the mirror portion 4, respectively. Furthermore, when the movable element 3 is at the switching position, the optical paths are provided between the light source 12A and the light receiving portion 12D and between the light source 12B and the light receiving portion 12C outside the mirror portion 4, respectively, and thus, the light paths are switched.

The optical switching device 1 according to the present preferred embodiment has the above-described structure (construction), and next its operation will be described.

First, when a voltage is applied between the fixed electrode 10 and the movable electrode 11, an electrostatic force that is generated between the fixed electrode 10 and the movable electrode 11 drives the movable element 3 against the spring force of the support beams 6 in the Y-axis direction. Thus, since the movable element 3 is displaced from the initial position to the switching position while each support beam is bent and deformed, the mirror portion 4 moves backward from the light paths of the optical device 12 and the optical paths are switched. Furthermore, when the application of the voltage is stopped, the movable element 3 returns to the initial position due to the spring force of the support beams 6 and, as a result, the mirror portion 4 moves into the light paths and the light paths returns to the initial state.

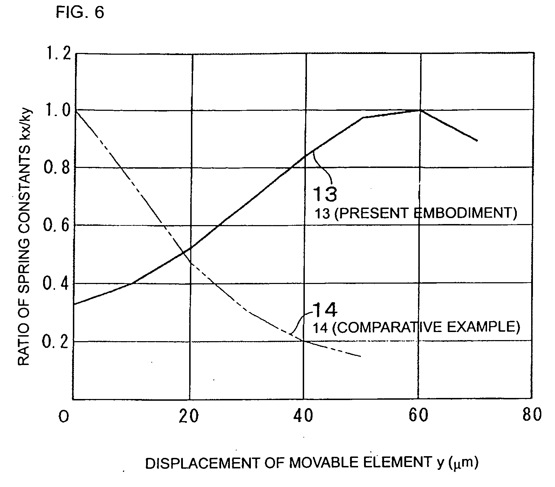

Now, with reference to Fig. 6, the relationship between the amount of displacement of the movable element 3 and the shape of the support beams 6 is described.

First, when the movable element 3 is driven by the comb-shaped electrodes 10 and 11, not only the electrostatic force in the displacement direction, but also an asymmetrical electrostatic force in the transverse direction caused by dimensional errors, and other factors, of the electrode plates 10A and 11A, are applied to the movable element 3. In particular, in order to increase the amount of displacement of the movable element 3, when the voltage applied between the electrodes 10 and 11 increases and the facing area between the electrode plates 10A and 11A increases by the displacement of the movable element 3, the electrostatic force in the transverse direction increases and cannot be neglected when compared to the spring force in the X-axis direction of the support beams 6. As a result, when the movable element 3 transversely deviates, the electrode plates 10A and 11A contact each other and are short-circuited, and it becomes impossible to displace the movable element 3.

In order to avoid such a state, in the present preferred embodiment, when the movable element 3 is at the initial position, the arm portions 7 and 8 of the support beams 6 are not parallel to each other, and the arm portions 7 and 8 are constructed so as to be substantially parallel to each other when the movable element 3 is displaced toward the switching position. With such a construction, the ratio (kx/ky) of the spring constant kx in the X-axis direction of the support beams 6 to the spring constant ky in the Y-axis direction changes along the characteristic line 13 shown by a solid line in Fig. 6 in accordance with the amount of displacement y in the Y-axis direction of the movable element 3.

In this manner, in the present preferred embodiment, the more the movable element 3 is displaced, the more perpendicular to the direction of displacement of the movable element 3 the arm portions 7 and 8 become. Accordingly, when the movable element 3 is displaced over a large distance of 0 to about 60 µm, the ratio (kx/ky) of the spring constants of the support beams 6 is increased in accordance with the amount of displacement y.

Therefore, even if the extra electrostatic force in the transverse direction increases, the spring constant kx of the support beams 6 is increased and the rigidity in the transverse direction is increased. Thus, while the support beams 6 are smoothly bent and deformed in the direction of displacement of the movable element 3, the transverse locational deviations are minimized by the increased rigidity.

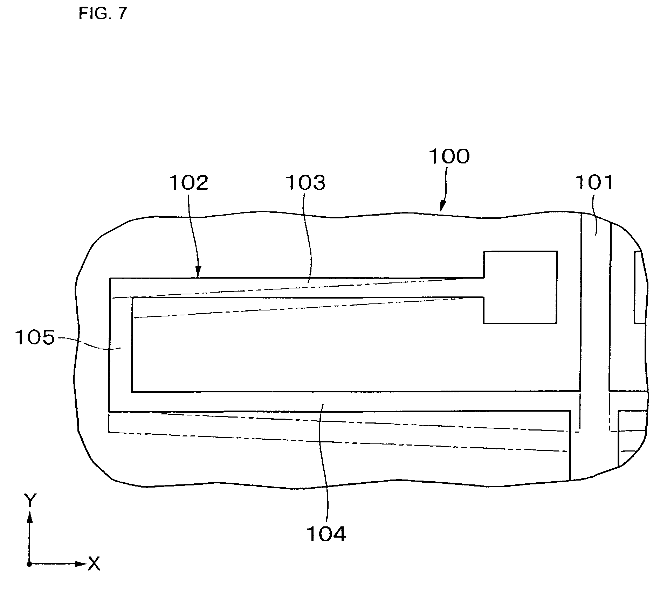

Next, with reference to Fig. 7, an electrostatic actuator 100 is a comparative example to compare to the present preferred embodiment. In this case, when a movable element 101 is at the initial position, as shown by a solid line in Fig. 7, a support beam 102 supporting the movable element 101 is maintained so as to be substantially U-shaped where arm portions 103 and 104 are not deformed, and, when the movable element 101 is displaced, as shown by an imaginary line, the arm portions 103 and 104 are bent and deformed such that the arm portions 103 and 104 open. In this comparative example, the relationship between the amount of displacement of the movable element 101 and the ratio of the spring constants of the support beam 102 is shown as a characteristic line 14 of an imaginary line in Fig. 6.

As is understood from this characteristic line 14, similar to the prior art (U.S. Patent No. 6,229,640), the more displaced the movable element 101 is, the more inclined the support beam 102 is, and the ratio (kx/ky) of the spring constants of the support beam 102 decreases. Accordingly, in the construction of the comparative example, even if the amount of displacement is in the range of about 20 µm to about 30 µm, it is likely that the movable element 101 will be impossible to be displaced because of its transverse locational deviations.

On the contrary, in the present preferred embodiment, as is understood from the peak value of the characteristic line 13, even if the maximum amount of displacement L of the movable element 3 is as large as about 60 µm, when the amount of displacement y changes from 0 to about 60 µm, the ratio (kx/ky) of the spring constants of the support beams 6 are maintained so as to be sufficiently large and it has been confirmed that the movable element 3 is stably and reliably driven.

Thus, according to the present preferred embodiment, when the movable element 3 is at the initial position, the arm portions 7 and 8 of the support beams 6 are maintained so as to be not parallel, and, when the movable element 3 is driven toward the switching position, the arm portions 7 and 8 are extended so to be substantially parallel to each other.

In this manner, when the movable element 3 is in the vicinity of the initial position, since the facing area of the electrode plates 10A and 10B of the electrodes 10 and 11, and thus, the transverse electrostatic force applied to the movable element 3, are relatively small, even if the arm portions 7 and 8 of the support beams 6 are not parallel, the movable element 3 can be stably driven in the Y-axis direction.

Furthermore, when the movable element 3 is displaced by a large amount to the vicinity of the switching position, the arm portions 7 and 8 are extended so as to be substantially parallel to each other along the X-axis direction that is substantially perpendicular to the direction of displacement of the movable element 3, and the spring constant kx in the X-axis direction of the support beams 6 is increased as compared to the spring constant ky in the Y-axis direction.

As a result, while being smoothly bent and deformed in the displacement direction of the movable element 3, the support beams 6 minimize transverse locational deviations of the movable element 3 because of the increased rigidity. In this case, the movable element 3 is supported in a well-balanced manner by the four support beams 6 at locations in the Y-axis direction and on both sides of the X-axis direction, and the movable element 3 is linearly driven in a more stable and reliable manner.

Consequently, even if the maximum amount of displacement L of the movable element 3 is set to be large, the movable element 3 is stably displaced between the initial position and the switching position and, while a sufficient amount of displacement of the movable element 3 is secured, a highly reliable optical switching device 1 is obtained.

Furthermore, since the comb-shaped fixed electrodes 10 and movable electrodes 11 define a driver, the size of the electrodes 10 and 11 can be reduced while maintaining sufficient facing areas between the electrodes, and, as a result, the movable element 3 is efficiently driven by a large electrostatic force. In this case, since transverse locational deviations of the movable element 3 is prevented by the support beams 6, a short circuit between the electrodes 10 and 11 facing each other with very small amount of gap is prevented.

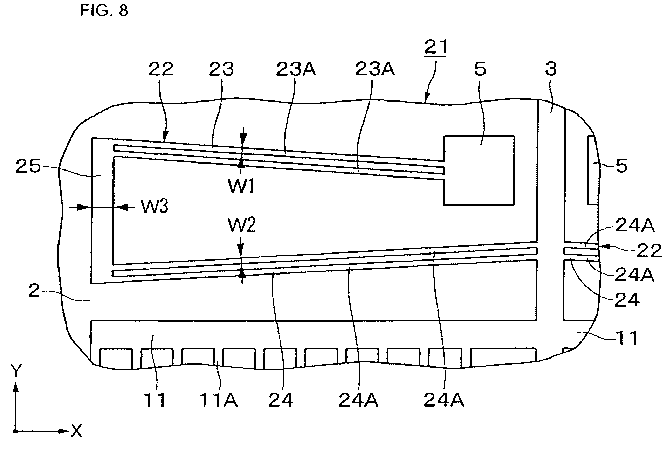

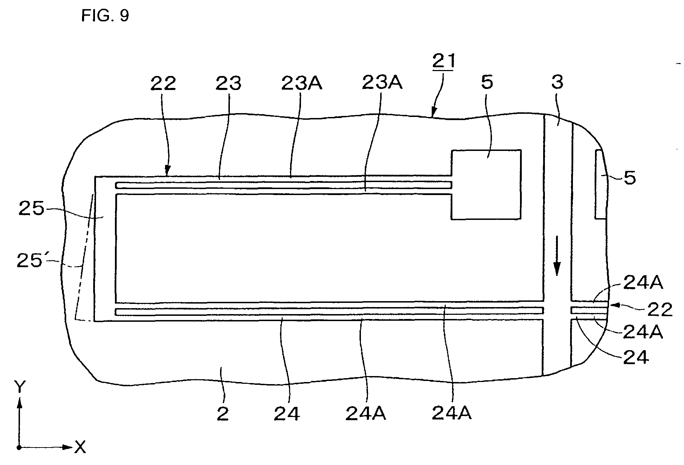

Next, Figs. 8 and 9 show a second preferred embodiment of the present invention. The present preferred embodiment includes arm portions of the support beam that are defined by a plurality of bar-shaped elements. Moreover, in the present preferred embodiment, the same components as those in the first preferred embodiment are given the same reference numerals and description thereof is omitted.

Reference numeral 21 represents an optical switching device. The optical switching device 21 includes the substrate 2, the movable element 3, the support beam fixing portions 5, the movable electrodes 11, support beams 22 to be described later, the mirror portion, the fixed electrodes (not illustrated), and others.

Reference numeral 22 represents four support beams supporting the movable element 3 such that the movable element 3 may be displaced in the Y-axis direction, and, substantially in the same manner as in the first preferred embodiment, each of the support beams 22 includes an arm portion 23 including one end that is connected to the support beam fixing portion 5, an arm portion 24 including one end that is connected to the movable element 3, and a connection portion 25 which connects the two arm portions 23 and 24.

The substrate-side arm portion 23 includes two bar-shaped elements 23A. The long and narrow bar-shaped elements 23A extend in the X-axis direction and have a space therebetween in the Y-axis direction and a width W1 in the Y-axis direction. Then, one end of the bar-shaped elements 23A is connected at different locations in the Y-axis direction to the support beam fixing portion 5 and the other end is connected at different locations to the connection portion 25, respectively.

Substantially in the same manner as the substrate-side arm portion 23, the movable element-side arm portion 24 includes two bar-shaped elements 24A having a width W2 in the Y-axis direction.

The connection portion 25 has a width dimension W3 which greater than the width dimensions W1 and W2 of the bar-shaped elements (W3 > W1, W3 > W2) so as to increase the rigidity in the X-axis direction of the support beam 22.

Thus, also in the present preferred embodiment, substantially the same operation-effect as in the first preferred embodiment is obtained. In the present preferred embodiment in particular, the arm portion 23 of the support beam 22 includes a plurality of bar-shaped elements 23A and the arm portion 24 includes a plurality of bar-shaped elements 24A.

Thus, in the arm portion 23, since the bar-shaped elements 23A are connected to the connection portion 25 at different locations in the Y-axis direction and the connection portion 25 is connected to the arm portion 23 at a plurality of locations, the rigidity at these connecting points is increased. Furthermore, since the connection portion 25 and the arm portion 24 are connected at plurality of locations corresponding to the bar-shaped elements 24A, the rigidity at the connecting points is increased.

Accordingly, when the support beam 22 is bent and deformed, displacement, as shown by an imaginary line in Fig. 9, which causes the connection portion 25 to become warped is minimized, and, as a result, the rigidity of the support beam 22 as a whole in the X-axis direction is increased.

Furthermore, since the width dimension W3 of the connection portion 25 is greater than the width dimensions W1 and W2 of the bar-shaped elements 23A and 24A of the arm portions 23 and 24, the rigidity of the connection portion 25 is increased and its elasticity (spring effect) is minimized. In this manner, when the support beam 22 is bent and deformed, the bending and deformation in the X-axis direction of the connection portion 25 is minimized and the spring constant kx in the X-axis direction of the support beam 22 is increased. Accordingly, transverse locational deviations of the movable element 3 are securely and reliably prevented.

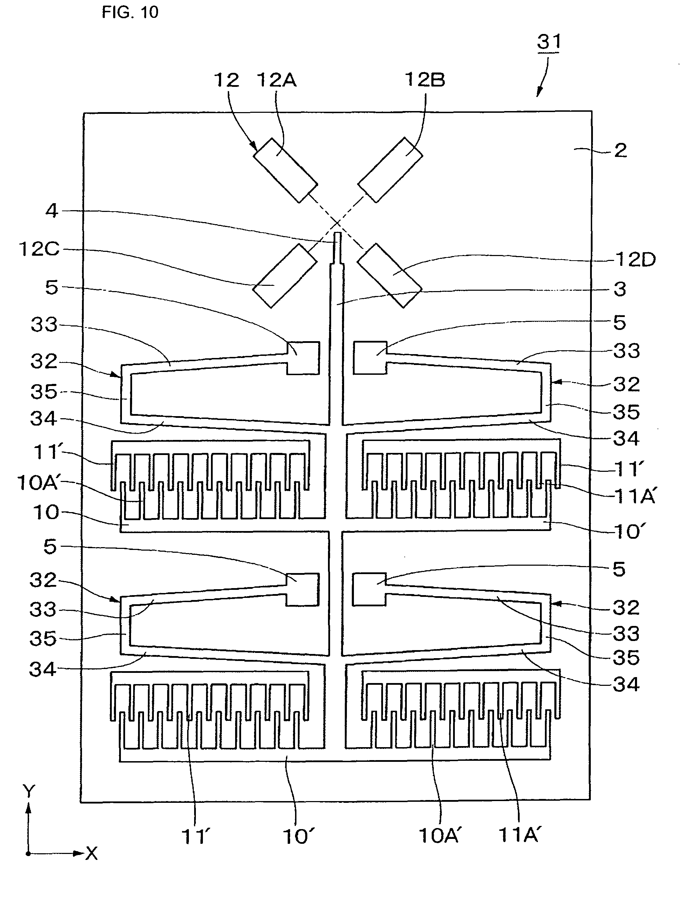

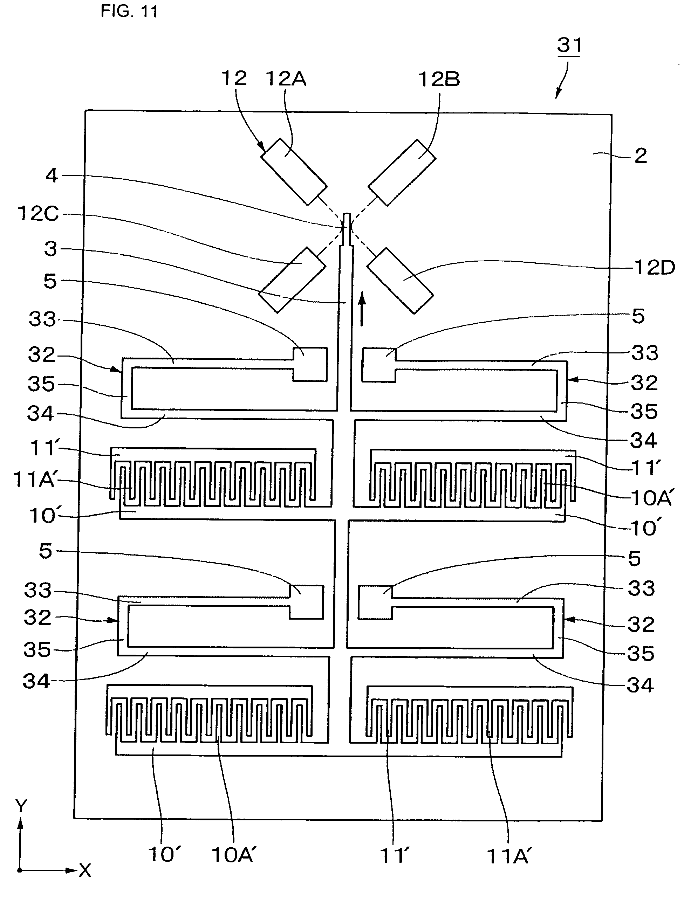

Next, Figs. 10 and 11 show a third preferred embodiment of the present invention. This preferred embodiment includes support beams which are configured so as to be substantially U-shaped and open when the movable element 3 is at the initial position. Moreover, in the present preferred embodiment, the same components as those in the first preferred embodiment are given the same reference numerals and the description thereof is omitted.

Reference numeral 31 represents an optical switching device. Substantially in the same manner as the first preferred embodiment, the optical switching device 31 includes the substrate 2, the movable element 3, the mirror portion 4, the support beam fixing portion 5, fixed electrodes 10', movable electrodes 11', and support beams 32 to be describe later, and others. Furthermore, in the optical switching device 31, the initial position and the switching position are reversed as compared to the first preferred embodiment. The initial position corresponds to the switching position in the first preferred embodiment and the switching position corresponds to the initial position in the first preferred embodiment.

Reference numeral 32 represents four support beams supporting the movable element 3 such that the movable element 3 may be displaced in the Y-axis direction, and, substantially in the same manner as in the first preferred embodiment, each of the support beams 32 includes a substrate-side arm portion 33 having one end that is connected to the support beam fixing portion 5, a movable element-side arm portion 34 having one end that is connected to the movable element 3 and which is spaced away from the substrate-side arm portion 33 in the Y-axis direction and that extends in the X-axis direction, and a connection portion 35 which connects the two arm portions 33 and 34.

However, as shown in Fig. 10, the support beam 32 is configured such that, when the movable element 3 is at the initial position, one end of the arm portions 33 and 34 is substantially U-shaped and open, and this is in a free state. At this time, the arm portions 33 and 34 are not parallel to each other such that the arm portions 33 and 34 are separated to a greater degree at one side (side of the movable element 3) than at the other side (side of the connection portion 35).

Furthermore, as shown in Fig. 11, when the movable element 3 is driven toward the switching position, the support beam 32 is bent and deformed in the Y-axis direction, and thus, the one end side of the arm portions 33 and 34 is displaced to be closer to each other. Then, when the movable element 3 is displaced by a large amount to the vicinity of the switching position, the arm portions 33 and 34 are extended substantially in parallel to each other in the X-axis direction.

Thus, also in the present preferred embodiment, substantially the same operation-effect as that of the first preferred embodiment is obtained. In the present preferred embodiment in particular, when the movable element 3 is at the initial position, since the support beam 31 is configured such that one end side of the arm portions 33 and 34 is substantially U-shaped and open, in the case where the amount of bending and deformation of the support beam 32 is set to be large, the space at one end of the arm portions 33 and 34 is widened at the initial position and, since the shape of the support beam 32 is not limited in order to avoid interference between the arm portions 33 and 34 at the initial position, the freedom of design is increased.

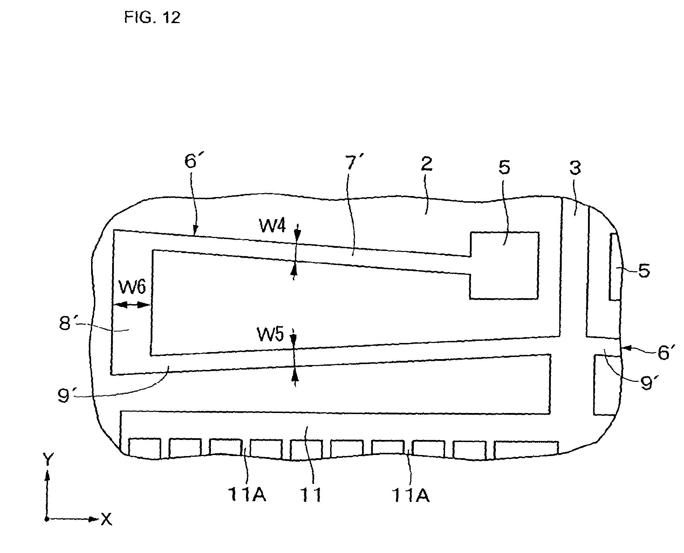

Moreover, in the first preferred embodiment, the support beam 6 includes the arm portions 7 and 8 and the connection portion 9 having substantially the same width dimension. However, the present invention is not limited to that and a modified example shown in Fig. 12 can be used.

In this case, although the support beam 6' includes a substrate-side arm portion 7', a movable element-side arm portion 8', and a connection portion 9' in substantially the same manner as the first preferred embodiment, the width dimension W6 in the X-axis direction of the connection portion 9' is larger as compared to the width dimensions W4 and W5 in the Y-axis direction of the arm portions 7' and 8' (W6 > W4, W6 > W5). In this modified example, substantially in the same manner as the second preferred embodiment, the bending and deformation in the X-axis direction of the connection portion 9' is minimized and the rigidity in the X-axis direction of the support beam 6' is increased.

Furthermore, in each preferred embodiment, two of the support beams 6, 22, and 32 are provided on each side in the X-axis direction of the movable element 3. However, the present invention is not limited to these and the support beams may be arranged so as to be one or a plurality of three or more on each side of the movable element 3.

Furthermore, in the second preferred embodiment, the arm portions 23 and 24 of the support beams 22 include two bar-shaped elements 23A and 24A, respectively. However, the present invention is not limited to this and the arm portions of the support beam may include three or more bar-shaped elements, respectively.

Moreover, in the preferred embodiments, the cases in which an electrostatic actuator is used in the optical switching devices 1, 21, and 31 are described as examples. However, the present invention is not limited to these and it can be used in other optical communication components having an optical shutter, optical attenuator, angular velocity sensors, resonators, and other suitable devices.

While the present invention has been described with respect to preferred embodiments, it will be apparent to those skilled in the art that the disclosed invention may be modified in numerous ways and may assume many embodiments other than those specifically set out and described above. Accordingly, it is intended by the appended claims to cover all modifications of the invention which fall within the true spirit and scope of the invention.

## Claims

1. An electrostatic actuator comprising:
a substrate;
a movable element disposed on the substrate and being movable in a Y-axis direction that is substantially perpendicular to an X-axis direction;
a plurality of support beams provided between the substrate and the movable element so as to be bent and deformed, the support beams being positioned on both sides in the X-axis direction of the movable element and supporting the movable element such that the movable element is displaceable in the Y-axis direction; and
a driver for displacing the movable element from an initial position to a switching position by driving the movable element in the Y-axis direction via an electrostatic force; wherein
each of the support beams includes two arm portions disposed so as to extend in the X-axis direction with a space therebetween in the Y-axis direction and a connection portion for connecting the arm portions which is bent so as to be substantially U-shaped; and
the arm portions of each support beam are configured such that, when the movable element is at the initial position, the arm portions are not parallel in the X-axis direction and, when the movable element is driven toward the switching position by the driver, the arm portions are extended so as to be substantially parallel.

2. An electrostatic actuator as claimed in claim 1, wherein each of the arm portions of the support beams includes a plurality of bar-shaped elements extending in the X-axis direction and having a space therebetween in the Y-axis direction and wherein the bar-shaped elements are connected to the connection portion at different locations in the Y-axis direction.

3. An electrostatic actuator as claimed in claim 1, wherein a width dimension in the X-axis direction of the connection portion is greater than a width dimension in the Y-axis direction of each of the arm portions.

4. An electrostatic actuator as claimed in claim 2, wherein a width dimension in the X-axis direction of the connection portion is greater than a width dimension in the Y-axis direction of each of the bar-shaped elements.

5. An electrostatic actuator as claimed in claim 1, wherein the arm portions of the support beam include a substrate-side arm portion in which one end is connected to the substrate and the other end is connected to the connection portion and a movable element-side arm portion in which one end is connected to the movable element and the other end is connected to the connection portion at a location spaced away from the substrate-side arm portion in the Y-axis direction.

6. An electrostatic actuator as claimed in claim 1, wherein the driver includes a fixed electrode having a plurality of electrode plates extending in the Y-axis direction and having a space therebetween in the X-axis direction so as to be comb-shaped, the fixed electrode being provided on the substrate, and a movable electrode having a plurality of electrode plates provided on the movable element and meshed with the electrode plates of the fixed electrode, the electrode plates having a space therebetween so as to be comb-shaped, and an electrostatic force is generated between the movable electrode and the fixed electrode.

7. An electrostatic actuator as claimed in claim 1, wherein the connection portion extends in the Y-axis direction, and includes one end connected to one of two arm portions and another end connected to the other of the two arm portions.

8. An optical switching device comprising:
a substrate;
a movable element disposed on the substrate and being movable in a Y-axis direction that is substantially perpendicular to an X-axis direction;
a plurality of support beams provided between the substrate and the movable element so as to be bent and deformed, the support beams being positioned on both sides in the X-axis direction of the movable element and supporting the movable element such that the movable element is displaceable in the Y-axis direction;
a driver for displacing the movable element from an initial position to a switching position by driving the movable element in the Y-axis direction via an electrostatic force; and
a mirror portion provided at an end of the movable element; wherein
each of the support beams includes two arm portions disposed so as to extend in the X-axis direction with a space therebetween in the Y-axis direction and a connection portion for connecting the arm portions which is bent so as to be substantially U-shaped; and
the arm portions of each support beam are configured such that, when the movable element is at the initial position, the arm portions are not parallel in the X-axis direction and, when the movable element is driven toward the switching position by the driver, the arm portions are extended so as to be substantially parallel.

9. An optical switching device as claimed in claim 8, further comprising an optical device provided on the substrate and which emits light paths, wherein the mirror portion is movable across the light paths such that the light paths are reflected by the mirror portion in the initial position and the light paths are not reflected in switching position.

10. An optical switching device as claimed in claim 9, wherein the optical device includes at least two one light sources and at least two light receiving portions, which are arranged such that when the movable element is in the initial position, optical paths are provided between one of the at least two light sources and one of the at least two light receiving portions, and when the movable element is in the switching position, optical paths are provided between the one of the at least two light sources and another one of the at least two light receiving portions.

11. An optical switching device as claimed in claim 8, wherein each of the arm portions of the support beams includes a plurality of bar-shaped elements extending in the X-axis direction and having a space therebetween in the Y-axis direction and wherein the bar-shaped elements are connected to the connection portion at different locations in the Y-axis direction.

12. An optical switching device as claimed in claim 8, wherein a width dimension in the X-axis direction of the connection portion is greater than a width dimension in the Y-axis direction of each of the arm portions.

13. An optical switching device as claimed in claim 11, wherein a width dimension in the X-axis direction of the connection portion is greater than a width dimension in the Y-axis direction of each of the bar-shaped elements.

14. An optical switching device as claimed in claim 8, wherein the arm portions of the support beam include a substrate-side arm portion in which one end is connected to the substrate and the other end is connected to the connection portion and a movable element-side arm portion in which one end is connected to the movable element and the other end is connected to the connection portion at a location spaced away from the substrate-side arm portion in the Y-axis direction.

15. An optical switching device as claimed in claim 8, wherein the driver includes a fixed electrode having a plurality of electrode plates extending in the Y-axis direction and having a space therebetween in the X-axis direction so as to be comb-shaped, the fixed electrode being provided on the substrate, and a movable electrode having a plurality of electrode plates provided on the movable element and meshed with the electrode plates of the fixed electrode, the electrode plates having a space therebetween so as to be comb-shaped, and an electrostatic force is generated between the movable electrode and the fixed electrode.

16. An optical switching device as claimed in claim 8, wherein the connection portion extends in the Y-axis direction, and includes one end connected to one of two arm portions and another end connected to the other of the two arm portions.
